# EUROPEAN PATENT SPECIFICATION

(11) **EP 0 814 121 B1**
(45) Date of publication and mention of the grant of the patent: **26.09.2001**
(21) Application number: 96109969.4
(22) Date of filing: 20.06.1996
(51) Int. Cl.: C08K 13/00, C08K 9/02, C08L 63/00

(54) **Low density, fire retardant one-part epoxy composition**
Flammhemmende Einkomponenten-Epoxidharzmischung niedriger Dichte
Composition de résine époxyde monocomposante ignifugée à basse densité

(43) Date of publication of application: 29.12.1997
(73) Proprietor: MINNESOTA MINING AND MANUFACTURING COMPANY, St. Paul, Minnesota 55133-3427 (US)
(72) Inventor: Juvin-Pedretti, Valerie c/o 3M Co.,, St. Paul, Minnesota 55144-1000 (US); Lamon, Alain c/o 3M Co.,, St. Paul, Minnesota 55144-1000 (US)
(74) Representative: Wilhelm, Stefan

(56) References cited:
- EP-A- 0 388 037
- US-A- 3 574 644

## Description

### Field of the invention

The invention refers to low density, fire-retardant one-part epoxy compositions, to thermally curable, processable one-part precursors of these compositions and to their use for aerospace applications.

### Background of the Invention

Fire-retardant epoxy-based materials and processes for their preparation have been widely discussed in literature.

US 5,019,605 describes, for example, a low density, fire resistant one-part epoxide composition comprising
(a) from 10 to 75 percent by weight of an organic epoxide compound having an epoxide functionality of at least 1;
(b) from 1 to 25 percent by weight of an epoxide hardener;
(c) from 20 to 50 percent by weight of a smoke suppressant;
(d) from 10 to 25 percent by weight of a filler capable of reducing the density of said composition; and
(e) from 1 to 10 percent by weight of an organic phosphorous-containing compound selected from the group consisting of alkyl phosphates, aryl phosphates, alkylphosphonates, arylphosphonates, and mixtures thereof
wherein said composition contains from about 3 to 10 weight percent bromine.

The cured compositions exhibit excellent flame retardancy and low weight which renders them suitable for applications in the aerospace industry such as in the manufacture of panels or walls used in aircraft interiors. The mechanical properties such as the compressive strength of the cured compositions of US '605 may not meet all of a customer's requirements depending on the application.

It is also often necessary that the precursors of the flame-retardant composition exhibit a low viscosity and a low viscosity increase with time at ambient temperature so that they can be processed by extruders, equipment comprising pumps or other application equipment.

US 4,145,369 describes flame-retardant epoxy resin compositions comprising a polyepoxide, an acid anhydride curing agent, an imidazole curing accelerator, aluminum trihydrate powder and red phosphorous powder or red phosphorous powder coated by a thermo-setting resin whereby controlling of the ratio of the amount of aluminum trihydrate and of red phosphorous is critical. It is stated in US '369 that the compositions show an improved pot-life and better workability on casting.

According to US 3,775,355 the viscosity of flame-retardant compositions comprising an epoxy resin and an epoxy resin curing agent can be decreased by adding at least one glycidyl ether of a dibrominated mononuclear monophenol. Simultaneously, the pot-life time is increased.

The processability of the precursors of these epoxy-based compositions and/or the mechanical or fire-retardant properties of the cured compositions do not meet all practical requirements, however, to a sufficient or desirable extent.

Consequently, there was a need for providing epoxy-based compositions which
- are characterized by an excellent flame-retardancy and furthermore
- have good mechanical properties and
- can be processed by application equipment such as extruders or pumps.

### Short Description of the Invention

The present invention refers to processable one-part precursors of low-density, fire-retardant epoxy-based compositions comprising at least one epoxide compound with an epoxide functionality of at least 1, at least one epoxide hardener, at least one filler capable of reducing the density of the composition, 1 - 20% by weight of one or more heat expandable graphite flame-retardant agents and 1 - 15% by weight of one or more flame-retardant plasticizers. The invention furthermore refers to the corresponding cured compositions and to their use in the aerospace industry.

### Detailed description of the invention

As used above and below, the term processable refers to one-part precursors of low-density, fire-retardant epoxy-based compositions which when applied by an air-driven extrusion pistol as is described in the test section below, show an extrusion rate which initially and after 8 days is at least 120 g/min, more preferably at least 140 g/min and especially preferably at least 150 g/min.

As used above and below, the term low-density refers to cured fire-retardant epoxy-based compositions which exhibits a density of less than 1 g/cm³ and more preferably of not more than 0.85 g/cm³ as measured according to the test section below.

As used above and below, the term fire-retardant refers to cured low-density epoxy-based compositions in which basic flammability and/or smoke density have been reduced by adding a flame-retardant system comprising at least one heat-expandable graphite flame-retardant agent. Flame-retardancy is assessed by performing the vertical burn test according to Airbus Directive (ABD) 00031, Issue A, October 1993, referred to in the test section below. This test gives a self-extinguishing time. The smoke density is measured according to JAR/FAR ( Joint Aviation Requirements / Federal Aviation Regulations), Part 25, Appendix F, Part V, referred to in the test section below. A cured low-density, epoxy-based composition is termed "fire-retardant" if the self-extinguishing time is less than 15 sec and/or if the smoke density is less than 200.

As used above and below, the term one-part refers to processable precursors of low-density, fire-retardant, epoxy-based compositions which comprise at least one epoxide compound with an epoxide functionality of at least 1 and at least one epoxide hardener, and which exhibit a sufficient pot-life time to be processable as indicated above.

Any organic compound having an oxirane ring polymerizable by a ring opening reaction may be used as the organic epoxide in the compositions of the invention. Such materials, broadly called epoxides, include monomeric epoxy compounds and polymeric epoxy compounds and can be aliphatic, cycloaliphatic, aromatic or heterocyclic. Useful materials generally have at least two polymerizable epoxy groups per molecule and, more preferably, from two to four polymerizable epoxy groups per molecule.

The organic epoxide may vary from low molecular weight monomeric products to high molecular weight polymers and may also vary greatly in the nature of the backbone and any substituent groups. The molecular weight may vary from 58 to about 100,000 or more. The backbone may be of any type and may be essentially halogen-free and, in particular, chlorine-free. It may also be brominated to give or contribute to a bromine content of the composition of below 8% by weight. Any substituents can also be essentially halogen-free or brominated and may otherwise be any group not having a nucleophilic or an electrophilic moiety (such as an active hydrogen atom) that is reactive with an oxirane ring. Permissible substituents include ester groups, ether groups, sulfonate groups, siloxane groups, nitro groups, amide groups, nitrite groups, phosphate groups, etc. Mixtures of various organic epoxides may also be used in the compositions of the invention.

The precursors of the present invention preferably comprise one or more liquid, low molecular weight expoxides which are frequently termed as reactive epoxy thinners or reactive epoxy diluents. These compounds are preferably selected from the group of optionally brominated di- and polyglycidyl ethers of di- and polyphenols or aliphatic or cycloaliphatic hydroxy compounds. Reactive epoxy diluents typically exhibit a molecular weight of less than 700, and they are preferably used in a concentration range from 1 to 20% by weight, more preferably from 1 to 15% by weight and especially preferably from 1 - 10% by weight with respect to the mass of the epoxide component comprising one or more epoxide compounds.

Epoxide compounds which are suitable for the precursor and the cured compositions of the present invention are preferably derived from bisphenol A, bisphenol E, bisphenol F, bisphenol S, aliphatic and aromatic amines, such as methylene dianiline and aminophenols, and halogen substituted bisphenol resins, novolacs, aliphatic epoxies, and combinations thereof and/or therebetween.

More preferably, the organic epoxide is selected from the group comprising diglycidyl ethers of bisphenol A and bisphenol F and epoxy novolacs.

Other useful organic epoxides include those disclosed in U.S. Pat. No. 5,019,605, U.S. Pat. No. 4,145,369, U.S. Pat. No. 3,445,436, U.S. Pat. No. 3,018,262, and Handbook of Epoxy Resins by Lee and Neville, McGraw Hill Book Co., New York (1967).

The low-density, flame-retardant epoxy-based compositions of the present invention preferably comprise 15 - 70% by weight, more preferably from 20 - 70% by weight and especially preferably from 30 - 65% by weight of one or more epoxide compounds.

Epoxide hardeners useful in the invention are materials that react with the oxirane ring of the organic epoxide to cause substantial crosslinking of the epoxide. These materials contain at least one nucleophilic or electrophilic moiety (such as an active hydrogen atom) that cause the crosslinking reaction to occur. Epoxide hardeners are distinct from epoxide chain extension agents, which primarily become lodged between chains of the organic epoxide and cause little, if any crosslinking. Epoxy hardeners as used herein are also known in the art as curing agents, catalysts, epoxy curatives, and curatives.

Sometimes it is differentiated between epoxide hardeners and accelerators which are used to increase the rate of the epoxide curing reaction. Accelerators typically are multifunctional materials which can also be classified as epoxide hardeners. Therefore, in the present specification, no differentiation is made between hardeners and accelerators.

It was found by the present inventors that adjusting the desired processing properties of the one-part precursor of the low-density, flame-retardant epoxy-based composition requires
(i) a proper selection of the epoxy hardener and
(ii) the presence of at least one flame-retardant plasticizer.

The term flame-retardant plasticizer denotes organic and, in particular, liquid organic materials which improve the processability of the one-part precursor of the epoxy-based composition and exhibit flame-retardant properties.

Phosphorous-containing flame-retardant plasticizers and, in particular, liquid esters of phosphoric and phosphonic acid are preferred. Especially preferred is the following smaller group of commercially available liquid phosphorous-containing flame-retardant plasticizers comprising Fyrol 51 (aliphatic phosphate/phosphonate oligomer, available from Akzo), Fyrol DMMP (dimethylmethylphosphonate, available from Akzo), Phosflex 4 (tributylphosphate, available from Akzo), Phosflex T-BEP (tributoxyethylphosphate, available from Akzo), Reofos 50 (isopropylated triarylphosphate, available from FMC), Reoflam PB 460 (Brominated phosphate ester, available from FMC), Firemaster 836 (halogenated phosphate ester, available from Great Lakes), Fyrol FR-2LV (1,3 dichloro-2propanol phosphate, available from Akzo), and Amgard TMCP (2-propanol-1-chloro-phosphate, available from Allbright & Wilson Ltd.).

The precursor of the epoxy-based composition comprises one or more and preferably 1 - 3 flame-retardant plasticizer compounds. The concentration of the flame-retardant plasticizer component comprising one or more flame-retardant plasticizer compounds, is 0.5 - 15% by weight and preferably from 1 - 12% by weight.

It is mentioned in US 5,019,605 that organic phosphorous-containing compounds act, above a level of 3% by weight, as a plasticizer with the result that mechanical properties of the cured composition begin to decrease. It is further stated there that above about 10 weight percent there is a dramatic reduction in such properties.

Contrary to this, it was found by the present inventors that a distinct improvement of the processability of the precursor of the composition can be obtained already at lower concentrations of the flame-retardant plasticizer component of at least about 0.5% by weight and, more preferably, of at least about 1% by weight. It was confirmed by the present inventors that the mechanical properties of the cured epoxy-based compositions tend to deteriorate with increasing concentration of the flame-retardant plasticizer component but the mechanical properties of the composites containing up to 15% by weight and, more preferably, up to 10% weight of the flame-retardant plasticizer component were found to be acceptable for many applications. It was furthermore found that the deterioration of mechanical properties of the cured epoxy-based composition can be at least partly compensated by increasing the concentration of the flame-retardant system. Flame-retardant agents which are especially useful for compensating the deterioration of mechanical properties caused by the flame-retardant plasticizer component, comprise, for example, boron-containing agents such as barium, calcium or zinc borates or metaborates and/or N/P-containing flame-retardant agents like melamine phosphate comprising both N and P.

The processability of the one-part precursors can thus be varied widely by adjusting the concentration of the flame-retardant plasticizer component. The precursor preferably contains from 0.5 - 8% by weight, more preferably from 0.5 - 6% by weight and especially preferably from 0.75 - 3% by weight of one or more flame-retardant plasticizers.

Despite the addition of a flame-retardant plasticizer component, the cured epoxy-based compositions according to the present invention exhibit advantageous mechanical properties and, in particular, a high compressive strength as measured by DIN 53454 (see test section below). The compressive strength of the epoxy-based compositions of the present invention at room temperature preferably is at least 30 MPa, more preferably at least 50 MPa and especially preferably at least 55 MPa.

The epoxy-based compositions according to the present invention are furthermore characterized by advantageous mechanical properties at elevated temperatures. The compressive strength at a temperature of 80°C preferably is at least 20 MPa, more preferably at least 25 MPa and especially preferably 35 MPa or more.

The processability of the one-part precursor is furthermore influenced by the proper selection of the hardener component comprising one or more epoxide hardener compounds.

It was found that amine-based hardeners like, for example, di(4-aminophenyl)-sulfone, di-(4-aminophenyl)ethers, 2,2-bis(4-aminophenyl)propane or diethylene triamine hardeners, generally result in rapidly curing, highly viscous one-part precursors of the epoxy-based compositions, the processability of which typically is insufficient for many applications and cannot be distinctly improved by the addition of one or more flame-retardant plasticizers.

It was furthermore found that one-part precursors comprising acid anhydride hardeners such as, for example, 4-methyltetrahydroxy phthalic acid anhydride, NMA (≈ Nadic Methyl Anhydride, 5-methyl-2,3-dicarboxynorbornene anhydride or methylnorbornene phthalic acid anhydrides, especially when used in combination with imidazole type hardeners such as Curezol 2PHZ (commercially available from Pacific Anchor Chemical), exhibit an increase of viscosity with time which is too high for many applications and results in an extrusion rate after 8 days which is lower than 120 g/min.

Hardeners which are suitable for the one-part precursors of the present invention are preferably selected from a group comprising substituted ureas such as toluene diisocyanate urea and dicyandiamides. Especially preferred is the following smaller group of commercially available hardeners comprising 1-cyanoguanidine (commercially available as Dicyandiamide CG 1200) and 1,1 methylene bis (phenyldimethyl urea), (commercially available as Omicure 52).

The one-part precursors of the present invention comprise one or more hardener compounds, preferably 1 - 4 and more preferably 1 - 3 hardener compounds. The concentration of the hardener component comprising one or more hardener compounds, preferably is from 1-55% by weight with respect to the epoxy-based composition, more preferably from 2 - 50% by weight and especially preferably from 10 - 45% by weight.

The above enumeration of suitable hardener compounds is illustrative only and by no means limiting. The person skilled in the art can easily identify suitable hardeners without undue experimentation by preparing one-part precursor systems comprising at least one flame-retardant plasticizer compound and at least one hardener compound, and subjecting the resulting composition to the extrusion rate test described in the test section below. One-part precursors of the present invention are characterized by an extrusion rate which initially, i.e. after preparing the one-part precursor, and after 8 days exhibit an extrusion rate of at least 120 g/min, more preferably of at least 140 g/min and especially preferably of at least 150 g/min. Especially preferred are one-part precursors exhibiting after 21 days an extrusion rate of at least 120 g/min, more preferably of at least 140 g/min and especially preferably of at least 150 g/min.

The epoxy-based compositions according to the present invention preferably exhibit a density of less than 1 g/cm³, more preferably of less than 0.85 g/cm³ and especially preferably of not more than 0.78 g/cm³.

The epoxy-based compositions according to the invention comprise one or more fillers which are capable of reducing the density of the compositions.

The low density filler useful in the compositions may be selected from hollow microspheres (which may be either organic or inorganic), blowing agents and the like. These materials are characterized as having a low weight by volume. For example, this filler may have a weight by volume (or density) of less than about 0.6 g/cm³ (preferably less than 0.5 g/cm³). It also may be characterized as having low absorptivity of epoxide resin and high compression strength. Further, they preferably are free flowing powders that preferably have a relatively homogeneous particle size. They typically have diameters in the range of from 1 to 300 micrometers. Moreover, they preferably have a smooth outer surface rather than a rough outer surface because the latter fillers tend to make-the one-part precursor more viscous and more difficult to process.

Hollow microspheres useful in the invention may be selected from a wide variety of materials including, by way of example, glass, ceramic (including sol-gel derived), zirconia, metal, and polymeric microspheres.

Preferably these microspheres are non-porous and have a diameter in the range of from about 20 to 100 micrometers and a density of less than about 0.5 g/cm³, more preferably one in the range of from about 0.1 to 0.45 g/cm³, and most preferably one of about 0.2 g/cm³.

Specific examples of useful hollow microspheres are the glass microspheres disclosed in U.S. Pat. Nos. 4,279,632 and 2,978,340, the ceramic microspheres disclosed in U.S. Pat. Nos. 4,421,562 and 4,637,990, the zirconia-based ceramic microspheres disclosed in U.S. Pat. No. 4,744,831 and the polymeric microspheres disclosed in U.S. Pat. Nos. 3,615,972, 3,472,798, 3,740,359, 3,945,956 and 4,075,138.

The epoxy-based compositions of the present invention preferably comprise 1 - 5 and more preferably 1 - 3 low density fillers whereby the concentration of the filler component comprising one or more fillers, preferably is from 5 - 55% by weight and especially preferably from 15 - 50% by weight.

The epoxy-based composition of the present invention furthermore comprises a fire-retardant system comprising at least one heat expandable graphite fire-retardant agent.

Examples of suitable expandable graphites are intercalation compounds of SOx, NOx, halogen and/or strong acids in graphite. These are also called graphite salts which can be prepared, for example, according to the method described in US 3,574,644. Preference is given to expandable graphites which at temperatures of, for example, 120° to 350°C release SO₂, SO₃, NO and/or NO₂ with expansion. The heat-expandable graphite flame-retardant agents preferably exhibit an expansion volume of 80 - 200 cm³/g at 500°C.

The expandable graphite flame-retardant agents can be present, for example, in the form of pellets having a maximum average diameter in the range from 0.05 - 5 mm. The diameter is more preferably in the range of 0.1 - 4 mm and especially preferably in the range of 0.5 - 3 mm.

Expandable graphite flame-retardant agents which are suitable for the present invention are commercially available. Preferred materials can be obtained as EXPAN C 8099 Lte from Chuo Kasei Ltd., Japan, SIGRAFLEX FR 90-60/80 from SOL Carbon Group and Carbofoil C110, Carbofoil BW100 and Foamchem S15 from Ajay Metachem.

The epoxy-based compositions of the present invention contain 0.5 - 20% by weight, more preferably from 1 - 15% by weight and especially preferably from 1 - 9% by weight of a heat-expandable graphite component comprising one or more, in particular, 1 - 3 heat-expandable graphite flame-retardant agents. Increasing the concentration of the heat-expandable graphite component above 20% by weight adversely affects the mechanical stability of the epoxy-based composition after it has been subjected to fire which is undesirable for many applications. A concentration of the heat-expandable graphite component of less than about 0.5% by weight was found to be not effective.

It is an essential feature of the present invention that the fire-retardant system of the epoxy-based composition comprises at least one heat-expandable graphite fire-retardant agent. The use of heat-expandable graphite fire-retardant agents results in one-part precursors of epoxy-based compositions which are characterized by an excellent processability. The decrease in processability observed when adding the expandable graphite component is low and typically less than 30% and more preferably less than 20% as compared to the processability the precursor would have when omitting the heat-expandable graphite component.

Heat-expandable graphites furthermore exhibit very effective flame-retardant properties and distinctly reduce both the smoke density and the self-extinguishing time of the cured composition without adversely affecting the mechanical properties of the composition.

Heat expandable graphites and their use for rendering normally flammable materials flame resistant is known and described, for example, in US 3,574,644. This reference describes, however, rapidly curing two-part precursors of epoxy-based compositions (example II comprising a diethylene triamine hardener) or epoxy-based systems comprising no hardener component (example IX).

In an especially preferred embodiment of the present invention, the fire-retardant system of the epoxy-based resin composition comprises at least one heat-expandable graphite flame-retardant agent and at least one bromine source which may be supplied in a variety of ways. For example, the organic epoxide may contain pendant bromine atoms to provide the or to contribute to the desired bromine content. However, it is generally more efficient to incorporate the bromine into the composition via one or more separate bromine-containing fire-retardant agents. Generally these materials are polybrominated materials. Examples of useful bromine-containing materials are brominated epoxy resins and bromine-substituted derivatives of diphenylether, diphenyloxide and ethylene phthalimide. Mixtures of bromine-containing materials may also be used. Specific examples of useful bromine-containing materials include decabromodiphenyloxide, hexabromocyclododecane, tetradecabromodiphenyloxybenzene, and ethylene bis(tetrabromophthalimide).

The amount of the bromine source or sources is preferably selected to give a bromine content of the composition of between about 0.25 - 8% by weight and, in particular, 0.5 - 5% by weight.

It was found that cured epoxy-based compositions comprising both at least one heat-expandable graphite flame-retardant agent and at least one or more bromine sources, is characterized by an especially low smoke density. This is surprising since aromatically bound bromine should result in an increase of smoke density rather than a decrease which shows that there is a bromine/heat-expandable graphite synergetic effect. Cured epoxy-based compositions of the present invention comprising both one or more heat-expandable graphite fire-retardant agents and one or more bromine sources, are furthermore characterized by highly advantageous mechanical properties and, in particular, high values of the compressive strength. The corresponding one-part precursors exhibit advantageous processing properties.

The fire-retardant systems of the compositions of the present invention may optionally comprise other flame-retardant agents.

A class of flame-retardant agent which is useful for the epoxy-based composites of the present invention comprises inorganic flame-retardant agents such as alumina trihydrate (= aluminum oxide trihydrate, sometimes also referred to as aluminum hydroxide) or other aluminum group metal hydroxides, magnesium hydroxide or other alkaline earth metal hydroxides, calcium carbonate, magnesium carbonate and boron containing compounds such as boric acid, zinc borate or barium or calcium metaborate.

Fire-retardant agents like aluminum group metal hydroxides, alkaline earth metal hydroxides or boric acid which when heated give off water, typically upon decomposition, are often also termed as smoke suppressants.

Epoxy-based compositions of the present invention comprising one or more inorganic flame-retardant agents and, in particular, one or more inorganic smoke suppressants are preferred. The concentration of the inorganic flame-retardant component comprising one or more inorganic flame-retardant agents and, in particular, one or more inorganic smoke suppressants is preferably between 1-30% and more preferably, from 1-25% by weight. If the concentration of the inorganic flame-retardant component is higher than 30% by weight, the processability of the precursor and/or the compressive strength of the cured composition typically are insufficient.

Another class of flame-retardant agents which are useful for the present invention are melamines, triazines, isocyanurates and urea and guanidin and their derivatives.

In a preferred embodiment, the flame-retardant system comprises 1 or 2 N-containing flame-retardant agents.

Another class of flame-retardant agents which are useful for the present invention are non-plasticizing P-containing flame-retardant agents like, for example, elemental red phosphorous, melamine phosphate, dimelamine phosphate and melamine pyrophosphate.

The concentration of the component comprsing one or more non-plasticizing P-containing agents, is preferably between 1-30% by weight and, more preferably, 1-25% by weight. If the concentration of this component exceeds 30% by weight, the processability of the precursor is often found to be too low.

The fire-retardant system of the epoxy-based composition of the present invention can furthermore comprise an intumescent component which creates when burned, a foamed char layer, which impedes heat-transfer and may operate as a sealant thus suppressing spreading of fire. Intumescent, fire-retardant components are typically complicated formulations usually comprising a "carbonific" part, i.e. a source of carbon, an acid source and a "spumific" part (or blowing agent) evolving gaseous products which blow the char up into the form of a foam. These functions are usually provided by a system comprising two, three or more compounds (J. Troitzsch, Makromol. Chem., Makromol. Symp., 74 (1993), 125-135, and Ian C. McNeill, Makromol. Chem., Makromol. Symp., 74 (1993), 11-20).

Other optional ingredients that may be preferably incorporated into the compositions of the invention include wetting agents, such as those selected from the group consisting of titanates, silanes, zirconates, zircoaluminates, phosphoric ester(s) and mixtures thereof. The wetting agent improves the mixability and processability of the composition and can also enhance the composition's handling characteristics. Useful wetting agents are disclosed in U.S. 5,019,605. An especially useful wetting agent is commercially available as Coatex DO-UP6L from Coatex, Genay, France. The concentration of the wetting agent component comprising one or more wetting agents, is typically lower than 6% by weight and more preferably not more than 5% by weight.

Other fillers may be incorporated in addition to the low-density fillers mentioned above. These are used to regulate rheological properties of the composition and adjust viscosity to improve processability. These are preferably inorganic fillers, including silica. Especially preferred is hydrophobic fumed silica which is commercially available as Aerosil from Degussa or CAB-O-SIL® from Cabot.

The precursors of the invention can be readily prepared by a number of techniques. For example, the various components may be added under ambient conditions to a suitable mixing vessel, such as a Mogul mixer. The vessel is preferably cooled to prevent reaction of the components during preparation and to facilitate removal of any heat generated during manufacture. Preferably the precursor is mixed at a temperature of less than 35°C. Additionally, slow mixing speeds are generally used to help prevent heat build-up in the mixer and to minimize breakage of any hollow microspheres employed. Mixing is continued until the components form a homogeneous mixture, after which time the precursor is removed from the mixer.

Due to their excellent processability the precursors can be applied by conventional application equipment such as extruders or equipment providing pumps.

The precursor can be applied to various substrates such as, for example, metals (for example, Al, Al alloys, titanium or stainless steel) or other substrates comprising, for example, glass, boron, carbon, Kevlar fibers, epoxy, phenols, cyanate esters and polyester matrices. It may be applied, for example, as a thin coating with a thickness of typically up to 3 mm. It may also be used for the preparation of bulky articles like, for example, for the construction of composite floor panels or walls used in aircraft interiors. Such floor panels or walls typically comprise a honeycomb structure with a thickness of typically from 1 mm to 50 mm which is filled with the precursor.

The precursor is subsequently thermally cured. The curing conditions can be widely varied depending on the specific application. The curing temperature is typically chosen between 105°C and 180 °C, and the curing time typically amounts between 15 and 180 minutes.

The one-part precursors of the epoxy-based compositions according to the invention are characterized by an excellent processability and exhibit both an advantageous initial viscosity (evaluated, for example, in terms of initial extrusion rate) and a low increase of viscosity with time (evaluated, for example, in terms of extrusion rate after 8 or 21 days, respectively). The one-part precursors of the invention are typically stable at room temperature for a period of 30 days or more.

The low-density, fire-retardant epoxy-based compositions which are obtainable by curing the corresponding precursors are characterized by an advantageous fire-retardancy evaluated, for example, in terms of smoke density and/or extinguishing time, and they furthermore exhibit advantageous mechanical properties evaluated, for example, in terms of compressive strength. The precursor and cured compositions of the present invention are, in particular, useful for aerospace applications because they are easily applicable, lightweight and fire-resistant materials which are capable of withstanding the forces encountered when used at the interface of a pressurized and non-pressurized zone.

The invention is furthermore illustrated by the examples described below. Prior to that some test methods used to characterize the precursors and cured epoxy-based composition will be described.

Unless specified otherwise, percentages are percentages by weight with respect to the mass of the one-part precursor or the cured epoxy-based composition, respectively. Throughout the examples, percentages are given as phr (percentages per hundred resin, i.e. percentages by weight with respect to the mass of the epoxy resin component).

### TEST METHODS

### Extrusion rate

The processability of the one-part precursor of the epoxy-based composition was evaluated by extruding it through standard equipment using the following procedure. An air driven application pistol (available from SEMCO, East Kilbride, U.K.) was fitted with a 150 ml disposable cartridge and a nozzle having an aperture of 6 mm. A disposable cartridge was filled with the precursor which was extruded using an air pressure of 5 bar. The time for an extrusion of 80g of the precursor was measured. Measurements were made immediately after the precursor was prepared (initial extrusion rate) and again after 8 days storage at room temperature (8 days' extrusion rate). Each precursor was evaluated twice and the results averaged.

### Compressive strength

Compressive strength of the cured epoxy-based composition was measured by DIN 53454. Precursors were prepared as in Example 1. About 200g of the precursor was cast into a release-coated mold having the dimensions of 12.5 mm x 12.5 mm x 25 mm.

The mold was placed in a forced air oven and subjected to a curing program. The oven temperature was raised from 23°C to 135°C over a period of 40 minutes and then held at 135°C for ten minutes. Then the temperature was reduced to 125°C over a period of 5 minutes. The mold containing the epoxy-based composition was then further cured for one hour at 125°C. Finally the epoxy-based composition was cooled to 23°C over a period of 40 minutes.

Samples were compressed at the rate of 0.5 mm/min using a Zwick Roell Model 1464 Tensile Tester (Zwick GmbH & CO., Ulm, Germany), equipped with heating capability.

Compressive strength was measured both at 23°C and 80°C. Samples were preconditioned in the heated equipment for at least 30 minutes before testing at 80°C.

At least three samples were measured for each resin mixture and the results were averaged and recorded in MPa.

### Density

Density of the cured epoxy-based composition was measured according to DIN 53479A. Resin mixtures were prepared as in Example 1. Samples of the epoxy-based composition were prepared by casting the corresponding precursors into molds and curing in a forced air oven using a temperature program as described under the test method "Compressive Strength", shown above.

The cured samples of the epoxy-based composition were removed from the molds and their exact dimensions recorded. Then each of the samples was weighed and the density calculated and recorded in grams per cm³.

### Smoke density

One-part precursors were prepared as described in Example 1. A sheet having a thickness of 32 mm was poured into an aluminum release-treated mold and cured with a heat press (available from Pinette Emidecau Industries) using a temperature program. The press temperature was raised from 23°C to 125°C at a rate of 3° per minute, and then held for one hour at 125°C. The press was then cooled rapidly to 23°C at a rate of 7° per min.

Samples having the dimensions of 76 mm x 76 mm x 32 mm were then cut from this large sheet. The surface of one side was abraded with sandpaper to insure that the exposed resin was representative of the overall composition.

The NBS smoke density chamber (NBS = National Bureau of Standards) was used to measure smoke density. This test method is described in detail in JAR/FAR Part 25, amdt. 25-66, Appendix F, Part V (JAR/FAR = Joint Aviation Requirements / Federal Aviation Regulations. A sample of the epoxy-based composition was placed over a gas flame of specific dimension. Smoke generated in the chamber is measured by light transmission of a vertical light beam through the air space in the oven.

Three samples of each epoxy-based composition were tested and the results were averaged.

### Vertical burn test

The vertical burn test was performed according to Airbus Directive (ABD) 00031, Issue A, October, 1993, using specially constructed panels.

The test panels comprise an 8.8 mm layer of honeycomb-like phenolic resin.The one-part precursor of the invention was filled into the honeycomb layer in an area of about 76 mm x 368 mm. In the test area, the honeycomb was completely filled and thus had a thickness of between 10 and 15 mm. A layer of epoxy carbon (EP 121 - C15-53 prepreg, commercially available from Stesalit, Switzerland) was laminated to the honeycomb layer followed by a layer of phenolic carbon (PF 801 - C15-53 prepreg, commercially available from Stesalit, Switzerland) and a layer of phenolic glass(PF 801 - 44-40 prepreg, commercially available from Stesalit, Switzerland). This procedure was then repeated on the other side of the resin-filled honeycomb.

The completed test panels were placed in a heated press (available from Pinette Emidecau Industries) and cured using a heat cycle. The temperature was raised from 23°C to 135°C at a rate of 3° per min. The laminate was then held in the press for 90 minutes at 135°C. The press was then cooled to 23°C at a rate of 3° per minute. During the heat lamination the pressure was 400 kPa.

Three test panels were tested for each epoxy-based resin composition. After an exposure to the flame, self-extinguishing times were measured and the results averaged.

| List of materials | | |
|---|---|---|
| (1) | Epoxy resin 1 | RUTAPOX 0300/S25, 75% polyglycidyl ether of phenol tormaldehyde novolac, 25% diluent S, equivalent weight 172, available from Rutgers Bakelite, Germany. |
| (2) | Epoxy resin 2 | EPIKOTE 232, blend of diglycidyl ether of bisphenol A and diglycidyl ether of bisphenol F, equivalent weight 170, available from Shell Chemicals. |
| (3) | Reactive epoxy | Diglycidyl ether of cyclohexanediol, DILUENT S, equivalent weight 160, available from Rutgers Bakelite, Germany. |
| (4) | Epoxy hardener 1 | DICYANDIAMIDE CG 1200, available from Air Products/Pacific Anchor, U.S.A. |
| (5) | Epoxy hardener 2 | 1,1 methylene bis (phenyldimethyl urea), OMICURE 52, available from Omicron Chemicals, U.S.A. |
| (6) | Hollow glass microspheres | B38 / 4000, average size 20 - 100 microns, available from 3M, St. Paul, Minnesota, U.S.A. |
| (7) | Silica filler | Hydrophobic fumed silica, AEROSIL R202, available from Degussa. |
| (8) | Heat-expandable graphite flame-retardant agent | Expandable carbon graphite, EXPAN C, Type 8099 Lte, available from Chuo Kasei Ltd., Japan. |
| (9) | Bromine source | Ethylene-bis(tetrabromophthalimide) SAYTEX BT 93, available from Ethyl Corporation, Baton Rouge, U.S.A. |
| (10) | Zinc borate | FIREBRAKE 290, available from Borax, Los Angeles, U.S.A. |
| (11) | Melamine phosphate | Available from DSM, Netherlands. |
| (12) | Aluminum trihydrate | ATH SH5, average particle size 5 microns, available from Atochem, France. |
| (13) | Fire-retardant plasticizer | AMGARD V490, available from Albright & Wilson. |
| (14) | Wetting agent | COATEX DO-UP 6L (phosphoric ester), available from Coatex, Genay, France. |

### Examples 1 - 7

Epoxy-based compositions of the present invention were prepared by combining the ingredients listed in table 1 in a two liter mechanical mixer. In table 1, all concentrations are given as phr. A temperature of less than 35°C was maintained during the mixing process, using a cooling jacket. The two epoxy resins 1 and 2 and the reactive epoxy diluent were combined with the wetting agent and mixed for about 5 minutes until homogeneous. Hollow glass microspheres were then added, followed by mixing for an additional five minutes. Aluminum trihydrate, melamine phosphate, zinc borate and ethylene-bis(tetrabromophthalate) were then added followed by mixing for five minutes.

A premix of the fire-retardant plasticizer (Amgard V490) and epoxy hardeners 1 and 2 was prepared separately and then added to mixture, followed by mixing for 1.5 hours. Fumed silica filler was then added, followed by mixing for 15 minutes. Finally, expandable carbon graphite was added, following by mixing for 10 minutes. The final resin mixture was a paste of uniform consistency.

The extrusion rate of the uncured, one-part precursor of the epoxy-based composition and the compressive strength, the density, the smoke density and the self-extinguishing times of the cured epoxy-based compositions were measured as described above. The results of the measurements are summarized in table 2.

### Comparative Examples 1 - 2 and Example 8

Epoxy-based compositions were prepared by combining the ingredients listed in table 3 as described above in Examples 1 - 7. In table 3, all concentrations are given as phr.

The extrusion rate of the uncured, one-part precursor of the epoxy-based composition and the compressive strength, the density, the smoke density and the self-extinguishing times of the cured epoxy-based compositions were measured as described above. The results of the measurements are summarized in table 4.

In Comparative Examples 1 and 2, respectively, no expandable carbon graphite fire-retardant agent or no fire-retardant plasticizer was present, respectively. The smoke density of the cured compositions of Example 8 was found to be too high but has a low self-extinguishing time of 3.4 sec.

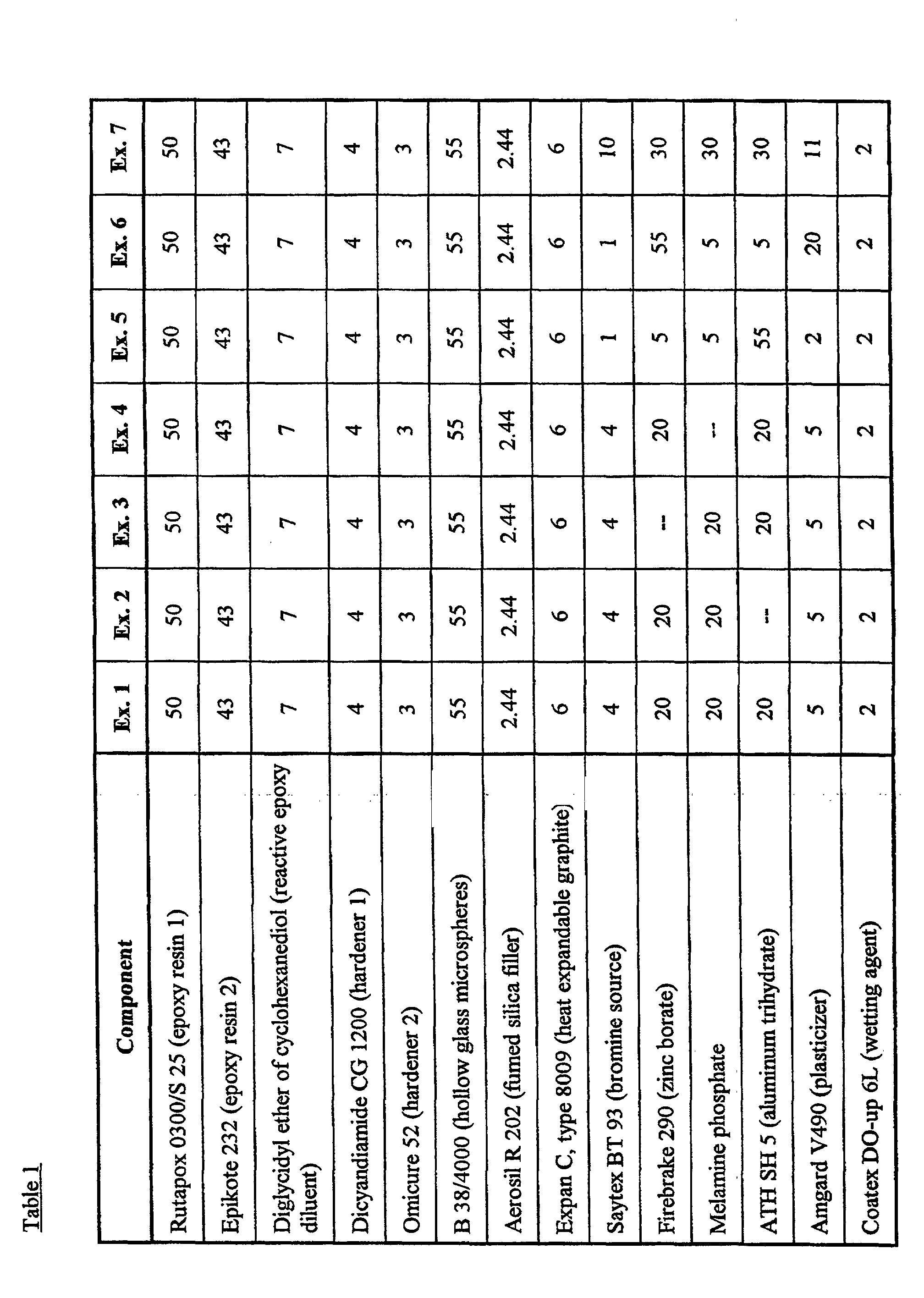

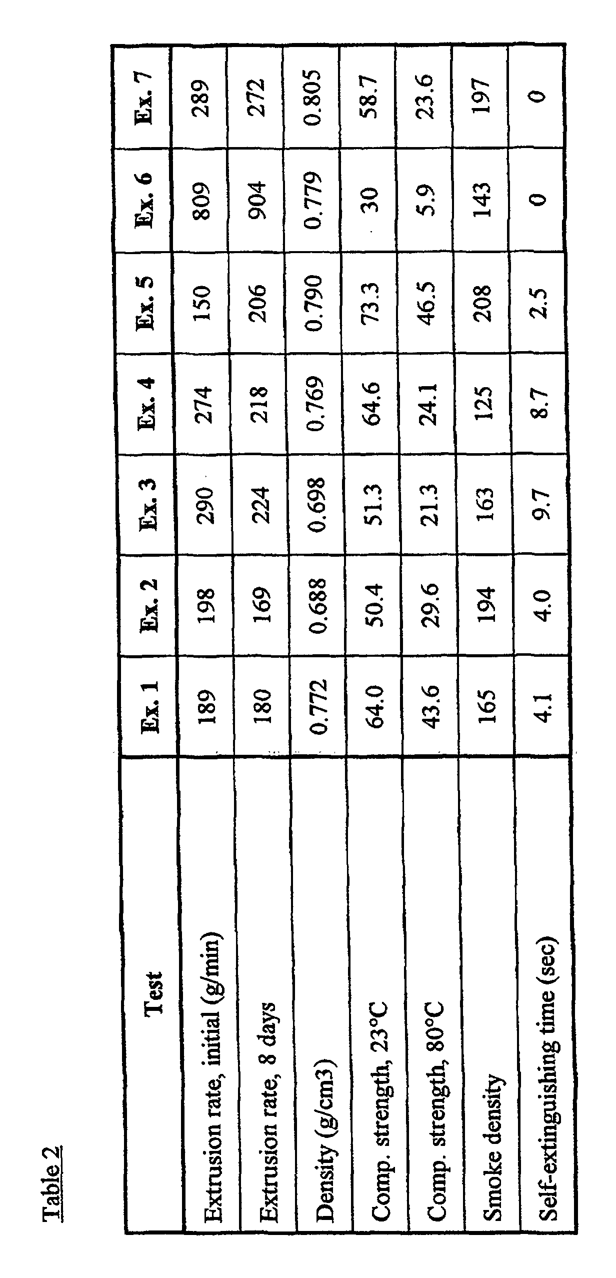

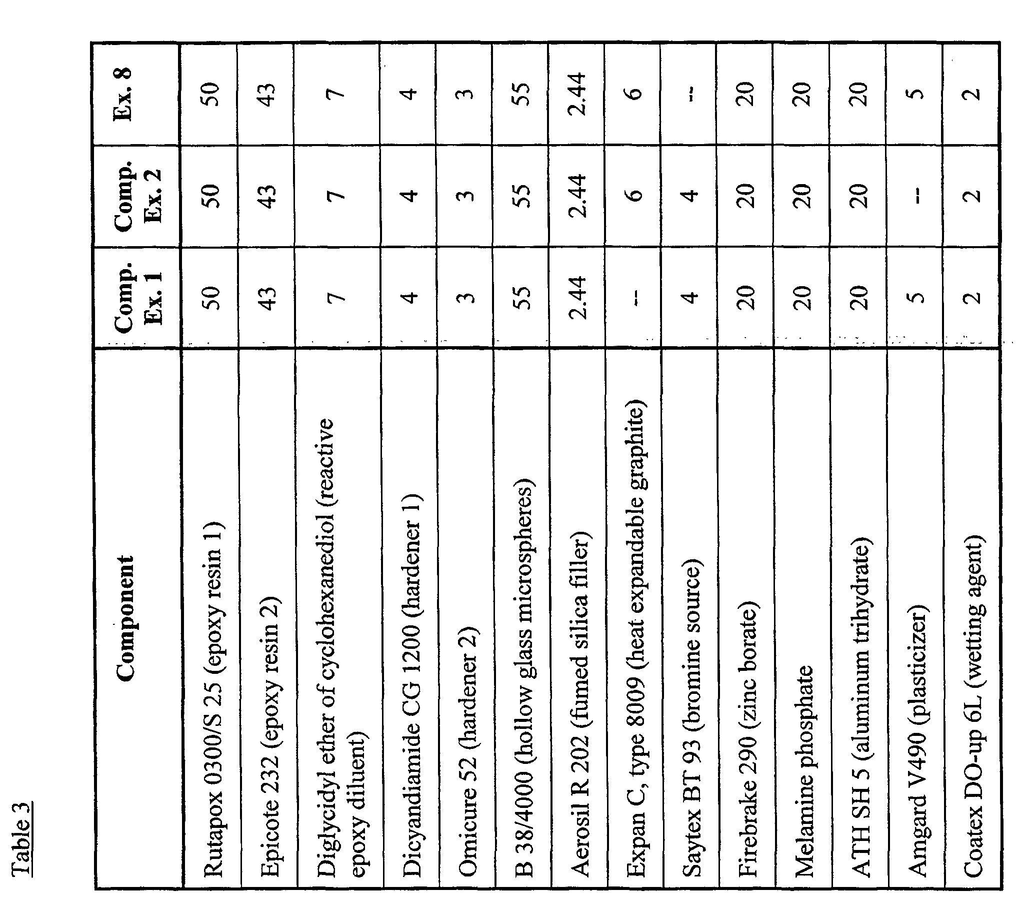

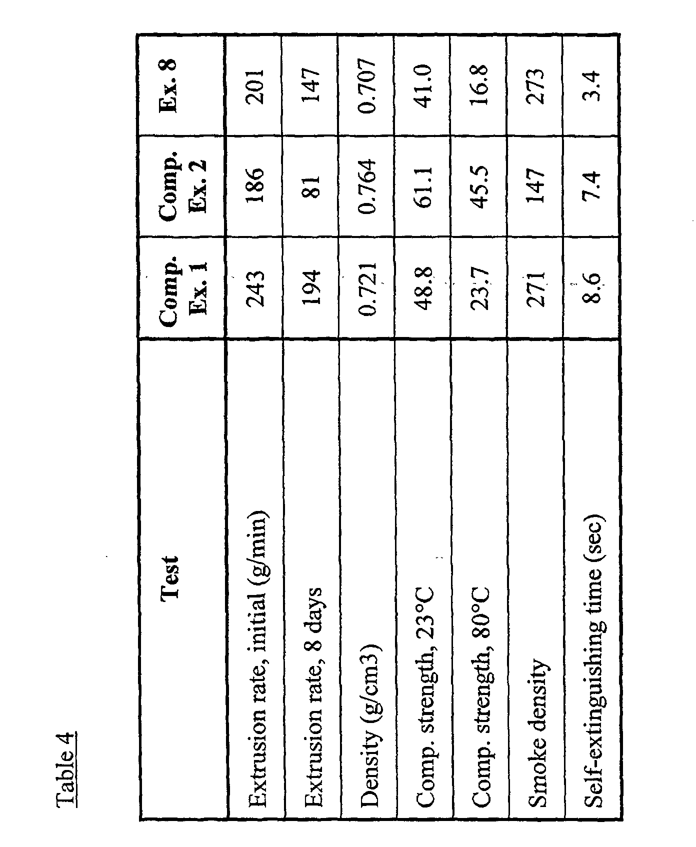

## Claims

1. Processable one-part precursor of a low-density, fire-retardant epoxy-based composition comprising at least one epoxide compound with an epoxide functionality of at least 1, at least one epoxide hardener, at least one filler capable of reducing the density of the composition, 1 - 20% by weight of one or more heat-expandable graphite flame-retardant agents and 1 - 15% by weight of one or more flame-retardant plasticizers.

2. Precursor of claim 1 comprising one or more bromine sources in an amount to give a bromine content of the composition between 0.25 - 8% by weight.

3. Precursor according to claims 1 - 2 comprising 15 - 70% by weight of one or more epoxide compounds.

4. Precursor according to claims 1 - 3 comprising 1 - 55% by weight of one or more epoxide hardeners.

5. Precursor according to claims 1 - 4 comprising one or more liquid esters of phosphoric acid and/or phosphonic acid as flame-retardant plasticizers.

6. Precursor according to claims 1 - 5 wherein at least one heat-expandable graphite flame-retardant agent exhibits an expansion volume of 80 - 200 cm³/g at 500°C.

7. Precursor according to claims 1 - 6 comprising at least one inorganic flame-retardant agent selected from the group comprising aluminum group metal hydroxides, alkaline earth metal hydroxides and boron-containing compounds.

8. Precursor according to claims 1 - 7 comprising at least one flame-retardant agent selected from the group containing N-containing and non-plasticizing P-containing fire-retardant agents.

9. Low-density, fire-retardant epoxy-based composition which is obtainable by thermally curing the precursor according to claims 1 - 8 at a temperature of between 105 and 180°C.

10. Use of the precursors according to claims 1 - 8 and of the epoxy-based composition according to claim 9 for aerospace applications.

## Patentansprüche

1. Verarbeitungsfähiger einkomponentiger Vorläufer für eine eine geringe Dichte aufweisende, flammwidrige Epoxidzusammensetzung, der mindestens eine Epoxidverbindung mit einer Epoxidfunktionalität von mindestens 1, mindestens einen Epoxidhärter, mindestens einen zur Verringerung der Dichte der Zusammensetzung befähigten Füllstoff, 1-20 Gew.-% eines oder mehrerer wärmeexpandierbarer Graphitflammschutzmittel und 1-15 Gew.-% eines oder mehrerer flammwidriger Weichmacher enthält.

2. Vorläufer nach Anspruch 1, der eine oder mehrere Bromquellen in einer Menge, die einen Bromgehalt der Zusammensetzung zwischen 0,25-8 Gew.-% ergibt, enthält.

3. Vorläufer nach den Ansprüchen 1-2, der 15-70 Gew.-% einer oder mehrerer Epoxidverbindungen enthält.

4. Vorläufer nach den Ansprüchen 1-3, der 1-55 Gew.-% eines oder mehrerer Epoxidhärter enthält.

5. Vorläufer nach den Ansprüchen 1-4, der als flammwidrige Weichmacher einen oder mehrere flüssige Phosphorsäure- und/oder Phosphonsäureester enthält.

6. Vorläufer nach den Ansprüchen 1-5, bei dem mindestens ein wärmeexpandierbares Graphitflammschutzmittel ein Expansionsvolumen von 80-200 cm³/g bei 500°C aufweist.

7. Vorläufer nach den Ansprüchen 1-6, der mindestens ein anorganisches Flammschutzmittel aus der Gruppe bestehend aus Hydroxiden von Metallen der Aluminiumgruppe, Erdalkalihydroxiden und borhaltigen Verbindungen enthält.

8. Vorläufer nach den Ansprüchen 1-7, der mindestens ein Flammschutzmittel aus der Gruppe bestehend aus N-haltigen und nicht weichmachenden P-haltigen Flammschutzmitteln enthält.

9. Eine geringe Dichte aufweisende, flammwidrige Epoxidzusammensetzung, die durch Heißhärtung des Vorläufers nach den Ansprüchen 1-8 bei einer Temperatur zwischen 105 und 180°C erhältlich ist.

10. Verwendung der Vorläufer nach den Ansprüchen 1-8 und der Epoxidzusammensetzung nach Anspruch 9 für Luft- und Raumfahrtanwendungen.

## Revendications

1. Précurseur en un composant, susceptible d'être mis en oeuvre, d'une composition ignifugeante à base d'époxy de faible densité comprenant au moins un composé époxyde avec une fonctionnalité époxyde au moins égale à 1, au moins un durcisseur d'époxyde, au moins une charge capable de réduire la densité de la composition, 1 - 20% en poids d'un ou plusieurs agents ignifugeants de type graphite dilatables à la chaleur et 1 - 15% en poids d'un ou plusieurs plastifiants ignifugeants.

2. Précurseur selon la revendication 1 comprenant une ou plusieurs sources de brome en quantité permettant d'avoir une teneur en brome dans la composition comprise entre 0,25 et 8% en poids.

3. Précurseur selon les revendications 1 - 2 comprenant 15 - 70% en poids d'un ou plusieurs composés époxyde.

4. Précurseur selon les revendications 1 - 3 comprenant 1 - 55% en poids d'un ou plusieurs durcisseurs d'époxyde.

5. Précurseur selon les revendications 1 - 4 comprenant un ou plusieurs esters liquides d'acide phosphorique et/ou d'acide phosphonique en tant que plastifiants ignifugeants.

6. Précurseur selon les revendications 1 - 5 dans lequel au moins un agent ignifugeant de type graphite dilatable à la chaleur présente un volume de dilatation de 80 - 200 cm³/g à 500°C.

7. Précurseur selon les revendications 1 - 6 comprenant au moins un agent ignifugeant minéral choisi dans le groupe comprenant les hydroxydes de métaux du groupe de l'aluminium, les hydroxydes de métaux alcalino-terreux et les composés borés.

8. Précurseur selon les revendications 1 - 7 comprenant au moins un agent ignifugeant choisi dans le groupe contenant les agents ignifugeants azotés et les agents ignifugeants phosphorés non plastifiants.

9. Composition ignifugeante à base d'époxy de faible densité susceptible d'être obtenue par durcissement thermique du précurseur selon les revendications 1 - 8 à une température comprise entre 105 et 180°C.

10. Utilisation des précurseurs selon les revendications 1 - 8 et de la composition à base d'époxy selon la revendication 9 pour des applications aérospatiales.
